(19) **Europäisches Patentamt**
**European Patent Office**
**Office européen des brevets**

(11) **EP 4 195 111 A1**

(12) **EUROPEAN PATENT APPLICATION**

(43) Date of publication:
**14.06.2023 Bulletin 2023/24**

(51) International Patent Classification (IPC):
**G06N 3/098** (2023.01)          **G06N 3/09** (2023.01)
**G06N 3/048** (2023.01)

(21) Application number: **22207559.0**

(22) Date of filing: **15.11.2022**

(52) Cooperative Patent Classification (CPC):
**G06N 3/098; G06N 3/09;** G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2021 CN 202111351559**

(71) Applicant: **Beijing Baidu Netcom
Science Technology Co., Ltd.
Beijing 100085 (CN)**

(72) Inventors:
• **LIU, Ji**
  **Beijing, 100085 (CN)**
• **YU, Sunjie**
  **Beijing, 100085 (CN)**
• **ZHOU, Jiwen**
  **Beijing, 100085 (CN)**
• **ZHOU, Ruipu**
  **Beijing, 100085 (CN)**
• **DOU, Dejing**
  **Beijing, 100085 (CN)**

(74) Representative: **advotec.
Patent- und Rechtsanwaltspartnerschaft
Tappe mbB
Widenmayerstraße 4
80538 München (DE)**

(54) **METHOD AND APPARATUS FOR TRAINING LONGITUDINAL FEDERATED LEARNING MODEL**

(57)     A method for training a longitudinal federated learning model is provided, and is applied to a first participant device. The first participant device includes label data. The longitudinal federated learning model includes a first bottom layer sub-model, an interaction layer sub-model, a top layer sub-model based on a Lipschitz neural network and a second bottom layer sub-model in a second participant device. First bottom layer output data of the first participant device and second bottom layer output data sent by the second participant device are obtained. The first bottom layer output data and the second bottom layer output data are input into an interaction layer sub-model to obtain interaction layer output data. Top layer output data is obtained based on the interaction layer output data and the top layer sub-model. The longitudinal federated learning model is trained according to the top layer output data and the label data.

inputting first training data in the first participant device into the first bottom layer sub-model to obtain first bottom layer output data of the first participant device — S101

obtaining second bottom layer output data sent by the second participant device, wherein the second bottom layer output data is obtained by using second training data and the second bottom layer sub-model — S102

inputting the first bottom layer output data and the second bottom layer output data into the interaction layer sub-model to obtain interaction layer output data — S103

inputting the interaction layer output data into the top layer sub-model to obtain top layer output data, determining a final error according to the top layer output data and the label data, and training the longitudinal federated learning model according to the final error — S104

FIG. 1

**Description**

**TECHNICAL FIELD**

The present disclosure relates to a field of computer technologies, and particularly to big data and deep learning fields, especially to a method and an apparatus for training a longitudinal federated learning model, a computer device and a storage medium.

**BACKGROUND**

Federated learning is suitable for training a large-scale distributed deep learning model, and a joint model is established for a local data set while a privacy protection is provided. In a longitudinal federated learning scene, a data set is vertically segmented and owned by different participants, that is, each participant has a disjoint attribute subset. A target is to collaboratively learn machine learning models on the premise that any data does not need to be transmitted from one participant to another.

In related art, with regard to a security privacy protection scheme in the longitudinal federated learning scene, most of the security privacy protection schemes mainly solve a privacy leakage problem of participants in a process of intermediate result exchange in an iterative process. For example, the privacy leakage problem is solved by means of differential privacy, homomorphic encryption, privacy protection set intersection and the like. However, in an actual application scene, participant nodes are possibly attacked, so that a performance of a global model is greatly influenced.

**SUMMARY**

The present disclosure provides a method and an apparatus for training a longitudinal federated learning model, a computer device and a storage medium.

According to a first aspect of the present disclosure, a method for training a longitudinal federated learning model is provided, applied to a first participant device, in which, the first participant device includes label data, the longitudinal federated learning model includes a first bottom layer sub-model, an interaction layer sub-model, a top layer sub-model based on a Lipschitz neural network and a second bottom layer sub-model in a second participant device, and the method includes: inputting first training data in the first participant device into the first bottom layer sub-model to obtain first bottom layer output data of the first participant device; obtaining second bottom layer output data sent by the second participant device, in which, the second bottom layer output data is obtained by using second training data and the second bottom layer sub-model; inputting the first bottom layer output data and the second bottom layer output data into the interaction layer sub-model to obtain interaction layer output data; and inputting the interaction layer output data into the top layer sub-model to obtain top layer output data, determining a final error according to the top layer output data and the label data, and training the longitudinal federated learning model according to the final error.

Optionally, training the longitudinal federated learning model according to the final error includes: propagating backward the final error to update model parameters of a sub-model in each layer in the longitudinal federated learning model, and performing loop iteration until a pre-review stop condition is met to obtain a trained target longitudinal federated learning model.

Optionally, propagating backward the final error to update the model parameters of the sub-model in each layer in the longitudinal federated learning model includes: adopting the final error to determine a top layer gradient corresponding to the model parameters of the top layer sub-model, and updating the model parameters of the top layer sub-model according to the top layer gradient; determining an interaction layer error according to the final error, determining a first gradient of a first splicing parameter corresponding to the first participant device according to the interaction layer error and the first bottom layer output data, and determining a first bottom layer sub-model error according to the interaction layer error and the first splicing parameter; adopting the final error and the second participant device to perform an interaction processing, to obtain a second gradient of a second splicing parameter corresponding to the second participant device and a second bottom layer sub-model error; adopting the first gradient to update the first splicing parameter of the interaction layer sub-model, and updating the model parameters of the first bottom layer sub-model according to the first bottom layer sub-model error; and adopting the second gradient to update the second splicing parameter of the interaction layer sub-model, and sending the second bottom layer sub-model error to the second participant device, in which the second bottom layer sub-model error is used to update the model parameters of the second bottom layer sub-model.

Optionally, a full connection layer in the first bottom layer sub-model is the Lipschitz neural network; and/or the full connection layer in the second bottom layer sub-model is the Lipschitz neural network.

Optionally, the Lipschitz neural network includes a plurality of layers, and a Lipschitz constant constraint is applied to each layer of the plurality of layers; and the Lipschitz constraint of the Lipschitz neural network is a product of the Lipschitz constant constraints of each layer of the plurality of layers.

Optionally, the Lipschitz constant constraint includes a weight norm constraint and a gradient norm constraint, a formula of the weight norm constraint is expressed as follows: $\|\overline{W_l}\|$ = $1/K_l$ , in which, $\overline{W_l} \in \mathrm{R}^{N_l \times N_{l\text{-}1}}$ is a weight matrix of layer $l$-1 and layer $l$, $K_l$ is the gradient norm constraint of a neural network of layer $l$; and a formula of the gradient norm constraint is expressed as follows: $\|\nabla \overline{z_l f}\|$ = $K_l$ , in which, $\overline{f}$ is an activation function, $K_l$ is the gradient norm constraint of the neural network of layer $l$, $\overline{z_l}$ is a pre-activation vector of the neural network of layer $l$.

Optionally, the activation function is a Lipschitz-Weibull activation function, and a formula of the Lipschitz-Weibull activation function is expressed as follows:

$$\overline{f}(z) = \begin{cases} \sum_{t=1}^{T} \overline{f_t}(z), z \geq \mu_t \\ K_l z, z < \mu_t \end{cases}, f_t(z) = 1 - e^{-\left(\frac{z - \mu_t}{\lambda_t}\right)^{\alpha_t}}$$

in which, $f_t$ is a t-th Weibull activation function having unique parameters $\lambda_t, \alpha_t, \mu_t$, and z is an element of a pre-activation vector $\overline{z}_{l\text{-}1}$.

Optionally, a range of the gradient norm constraint $K_l$ of the neural network of layer $l$ is as follows:

$$1 < K_l \leq \min\left\{ \frac{\|\overline{f}(\overline{z}_{l-1})\|}{\|W_l f(z_{l-1})\| - \varepsilon}, \max\left\{ -\min \frac{\partial \overline{f}}{\partial \overline{z}_{l-1}}, \max \frac{\partial \overline{f}}{\partial \overline{z}_{l-1}} \right\} \right\}$$

in which, $\varepsilon$ is an error between each layer; and $W_l$ is the weight matrix of a fully connected neural network.

According to a second aspect of the present disclosure, an apparatus for training a longitudinal federated learning model is provided, applied to a first participant device, in which, the first participant device includes label data, the longitudinal federated learning model includes a first bottom layer sub-model, an interaction layer sub-model, a top layer sub-model based on a Lipschitz neural network and a second bottom layer sub-model in a second participant device, and the apparatus includes: a first acquiring module, configured to input first training data in the first participant device into the first bottom layer sub-model to obtain first bottom layer output data of the first participant device; a second acquiring module, configured to obtain second bottom layer output data sent by the second participant device. The second bottom layer output data is obtained by using second training data and the second bottom layer sub-model; a third acquiring module, configured to input the first bottom layer output data and the second bottom layer output data into the interaction layer sub-model to obtain interaction layer output data; and a training module, configured to input the interaction layer output data into the top layer sub-model to obtain top layer output data, determine a final error according to the top layer output data and the label data, and training the longitudinal federated learning model according to the final error.

Optionally, the training module is specifically configured to: propagate backward the final error to update model parameters of a sub-model in each layer in the longitudinal federated learning model, and perform loop iteration until a pre-review stop condition is met to obtain a trained target longitudinal federated learning model.

Optionally, the training module is specifically configured to: adopt the final error to determine a top layer gradient corresponding to the model parameters of the top layer sub-model, and update the model parameters of the top layer sub-model according to the top layer gradient; determine an interaction layer error according to the final error, determine a first gradient of a first splicing parameter corresponding to the first participant device according to the interaction layer error and the first bottom layer output data, and determine a first bottom layer sub-model error according to the interaction layer error and the first splicing parameter; adopt the final error and the second participant device to perform an interaction processing, to obtain a second gradient of a second splicing parameter corresponding to the second participant device and a second bottom layer sub-model error; adopt the first gradient to update the first splicing parameter of the interaction layer sub-model, and update the model parameters of the first bottom layer sub-model according to the first bottom layer sub-model error; and adopt the second gradient to update the second splicing parameter of the interaction layer sub-model, and send the second bottom layer sub-model error to the second participant device, in which the second bottom layer sub-model error is used to update the model parameters of the second bottom layer sub-model.

Optionally, a full connection layer in the first bottom layer sub-model is the Lipschitz neural network; and/or the full connection layer in the second bottom layer sub-model is the Lipschitz neural network.

Optionally, the Lipschitz neural network includes a plurality of layers, and a Lipschitz constant constraint is applied to each layer of the plurality of layers; and the Lipschitz constraint of the Lipschitz neural network is a product of the Lipschitz constant constraints of each layer of the plurality of layers.

Optionally, the Lipschitz constant constraint includes a weight norm constraint and a gradient norm constraint, a formula of the weight norm constraint is expressed as follows: $\|\overline{W_l}\| = 1/K_l$, in which, $\overline{W_l} \in \mathrm{R}^{N_l \times N_{l-1}}$ is a weight matrix of layer $l$-1 and layer $l$, $K_l$ is the gradient norm constraint of a neural network of layer $l$; and a formula of the gradient norm constraint is expressed as follows: $\|\nabla_{\overline{z_l}} \overline{f}\| = K_l$, in which, $\overline{f}$ is an activation function, $K_l$ is the gradient norm constraint of the neural network of layer $l$, $\overline{z_l}$ is a pre-activation vector of the neural network of layer $l$.

Optionally, the activation function is a Lipschitz-Weibull activation function, and a formula of the Lipschitz-Weibull activation function is expressed as follows:

$$\overline{f}(z) = \begin{cases} \sum_{t=1}^{T} \overline{f_t}(z), z \geq \mu_t \\ K_l z, z < \mu_t \end{cases}, f_t(z) = 1 - e^{-\left(\frac{z-\mu_t}{\lambda_t}\right)^{\alpha_t}}$$

in which, $\overline{f_t}$ is a t-th Weibull activation function having unique parameters $\lambda_t, \alpha_t, \mu_t$, and z is an element of a pre-activation vector $\overline{z}_{l-1}$.

Optionally, a range of the gradient norm constraint $K_l$ of the neural network of layer $l$ is as follows:

$$1 < K_l \leq \min\left\{ \frac{\|\overline{f}(\overline{z}_{l-1})\|}{\|W_l f(z_{l-1})\| - \varepsilon}, \max\left\{ -\min\frac{\partial \overline{f}}{\partial \overline{z}_{l-1}}, \max\frac{\partial \overline{f}}{\partial \overline{z}_{l-1}} \right\} \right\}$$

in which, $\varepsilon$ is an error between each layer; and $W_l$ is the weight matrix of a fully connected neural network.

According to a third aspect of the present disclosure, a non-transitory computer-readable storage medium storing computer instructions is provided, in which the computer instructions are configured to execute a method for training a longitudinal federated learning model according to the first aspect.

According to technical solutions of the present disclosure, an anti-attack capability of a longitudinal federated learning system may be improved, dirty data and malicious update diffusion may be effectively limited to resist attacks, an attack defense capability is improved, and a security of the federated learning system is improved.

It should be understood that, the content described in the part is not intended to recognize key or important features of embodiments of the present disclosure, nor intended to limit the scope of the present disclosure. Other features of the present disclosure will be easy to understand through the following specification.

**BRIEF DESCRIPTION OF THE DRAWINGS**

The drawings are intended to better understand the solution, and do not constitute a limitation to the disclosure.

FIG. 1 is a schematic diagram of a method for training a longitudinal federated learning model provided by an embodiment of the present disclosure;

FIG. 2 is a schematic diagram of a method for training a longitudinal federated learning model according to an embodiment of the present disclosure;

Fig. 3 is a schematic diagram of a method for training a longitudinal federated learning model provided by another embodiment of the present disclosure;

FIG. 4 is a flowchart for updating model parameters based on a backward propagation of a final error according to an embodiment of the present disclosure;

FIG. 5 is a structural block diagram of an apparatus for training a longitudinal federated learning model provided by an embodiment of the present disclosure;

FIG. 6 is a block diagram of an electronic device for implementing a training method of a longitudinal federated learning model according to an embodiment of the present disclosure.

## DETAILED DESCRIPTION

The illustrative embodiments of the present disclosure are described as below with reference to the accompanying drawings, which include various details of embodiments of the present disclosure to facilitate understanding, and should be considered as merely illustrative. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

It should be understood that federated learning is suitable for training a large-scale distributed deep learning model, and a joint model is established for a local data set while a privacy protection is provided. In a longitudinal federated learning scene, a data set is vertically segmented and owned by different participants, that is, each participant has a disjoint attribute subset. A target is to collaboratively learn machine learning models on the premise that any data does not need to be transmitted from one participant to another. Compared with the transverse federated learning, the longitudinal federated learning is more beneficial to establish cooperation among enterprises, and more powerful models are jointly established by using respective specific data. One party attached with a label may be referred to as an active party, and other parties are referred to as passive parties. In order to train a longitudinal federated learning model, all parties iteratively exchange some intermediate results in a safe mode until a joint training model is obtained. After a trained model is obtained, all parties use the model to cooperatively determine a model prediction of a new sample in the prediction data set. Generally, a longitudinal joint learning system assumes that the participants are honest, and at the end of the learning, only model parameters associated with their own features are held by the parties.

Compared with a centralized learning scheme, the federated learning has a natural privacy protection capability on data. However, meanwhile, the federated learning model is trained through a large number of unreliable devices and private, unobservable data sets. Therefore, local data and training processes of other participants may not be supervised between all parties while the privacy protection is realized to a certain extent. Invisible attributes may bring serious security threats and are mainly derived from the following.

(1) An untrusted participant: there is a large number of participants in the federated learning system, which may contain one or more malicious users, and malicious users may even hook each other to cause more serious consequences;

(2) Privacy leakage of an intermediate result: the longitudinal federated learning trains the joint model, exchange of intermediate results is involved in an iteration process, and a security problem of privacy leakage exists.

In addition, some recent researches show that the privacy protection in the federated learning is insufficient to protect bottom layer training data from being attacked by the privacy leakage. Model gradients transmitted in the training process may expose sensitive information, or even cause serious information leakage.

In related art, with regard to a security privacy protection scheme in the longitudinal federated learning scene, most of the security privacy protection schemes mainly solve a privacy leakage problem of participants in a process of intermediate result exchange in an iterative process. Some examples are illustrated in the following.

(1) Differential privacy: the differential privacy aims to provide a method for maximizing accuracy of data query when querying from a statistical database, while minimizing the opportunity to identify their records.

(2) Homomorphic encryption: the homomorphic encryption allows data to be computed, sorted, searched, and edited.

(3) Privacy protection set intersection (PSI): under a condition that the data is held by different managers, the win-win situation of the privacy protection and information sharing is achieved by PSI calculation.

However, for an untrusted participant problem, a non-federated learning solution in the related art is to identify dirty data by analyzing an updated gradient using a dimensionality reduction method (e.g., principal component analysis (PCA), anomaly detection, or interpretability technology). In addition, Byzantine faults of some distributed computing resources may also lead to model poisoning attacks. In the event of a Byzantine failure, the attacker manipulates the updating of the local model, so that a performance of the global model is greatly reduced. In order to achieve Byzantine robustness, the malicious user may be identified by analyzing the updated gradient using a hidden Markov model or a secure aggregation protocol.

That is, the longitudinal federated learning system in the related art introduces solutions such as the differential privacy, the homomorphic encryption and the privacy protection set intersection, to guarantee data privacy in the model training process. However, these solutions focus on solving the privacy leakage problem in the exchange of intermediate results during the iterative process, assuming that the participants are honest. However, in an actual application scene, a participant node is possibly to be attacked, so that the performance of the global model is greatly influenced. Moreover, common dimensionality reduction methods for updating intermediate data to identify the malicious user are suitable for the non-federated learning framework, which do not work well in scene where the malicious users are identified in federated learning.

Based on the above problems, a method and an apparatus for training a longitudinal federated learning model, a computer device and a storage medium are provided in the present disclosure. An anti-attack capability of a longitudinal federated learning system may be improved, dirty data and malicious update diffusion may be effectively limited to resist attacks. An attack defense capability is improved, and a security of the federated learning system is improved.

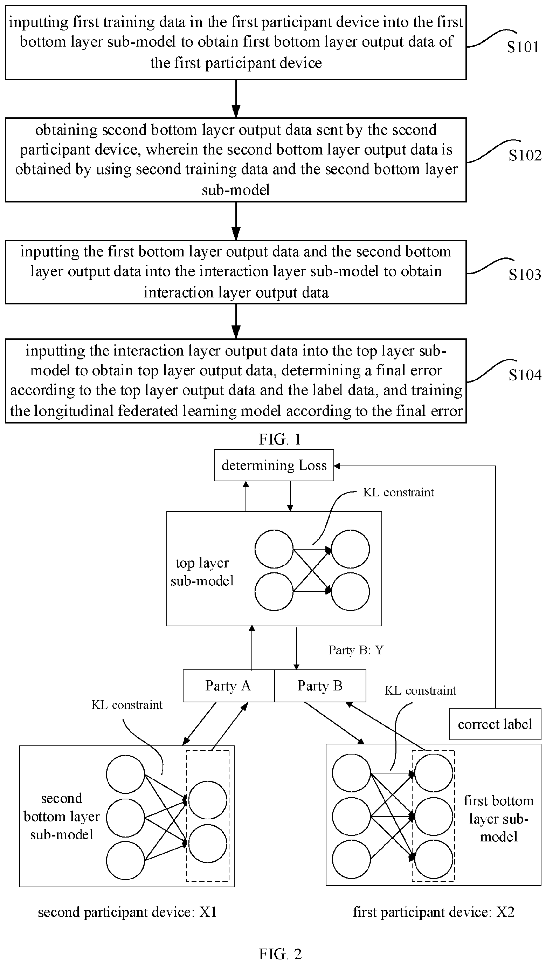

FIG. 1 is a schematic diagram of a method for training a longitudinal federated learning model provided by an embodiment of the present disclosure. It should be noted that the method for training the longitudinal federated learning model provided by the embodiment of the disclosure may be applied to a first participant device. The first participant device may include label data. The longitudinal federated learning model may include a first bottom layer sub-model, an interaction layer sub-model, a top layer sub-model based on a Lipschitz neural network and a second bottom layer sub-model in a second participant device. For example, as illustrated in FIG. 2, the first bottom layer sub-model, the interaction layer sub-model and the top layer sub-model are deployed on the first participant device. The second bottom layer sub-model is deployed in the second participant device. The first bottom layer sub-model, the interaction layer sub-model, the top layer sub-model and the second bottom layer sub-model form the longitudinal federated learning model.

As illustrated in FIG. 1, a method for training a longitudinal federated learning model of an embodiment of the present disclosure may include following steps.

At S101, first training data in the first participant device is input into the first bottom layer sub-model to obtain first bottom layer output data of the first participant device.

Optionally, the first participant device and the second participant device may establish a communicatively connection in advance by means of handshake and identity authentication. The structure of the longitudinal federated learning model may be configured in the first participant device and the second participant device in advance. For example, a first bottom layer sub-model, an interaction layer sub-model and a top-layer sub-model are pre-configured on the first participant device. The top layer sub-model is a model constructed based on a Lipschitz neural network. A second bottom layer sub-model is pre-configured on the second participant device. That is, the longitudinal federated learning model to be trained at least includes the first bottom layer sub-model, the interaction layer sub-model, the top layer sub-model based on a Lipschitz neural network and the second bottom layer sub-model in the second participant device. The input of the first bottom layer sub-model is configured as feature data corresponding to the first training data, and the first bottom layer sub-model may be a plurality of layers. The input of the second bottom layer sub-model is configured as feature data corresponding to second training data on the second participant device. The interaction layer sub-model may be configured as a full connection layer. The input of the interaction layer sub-model may be configured as a concatenation of the output of the first bottom layer sub-model and the output of the second bottom layer sub-model, i.e., for splicing the output of the first bottom layer sub-model and the second bottom layer sub-model, and connecting the top layer sub-model. The input of the top-layer sub-model is configured as the output of the interaction layer sub-model, and the top-layer sub-model is configured to output a result of the longitudinal federated learning model.

After the model structure of the longitudinal federated learning model is configured, the model needs to be trained. Model parameters of a sub-model in each layer in the longitudinal federated learning model are determined, so that a trained target longitudinal federated learning model may complete a target task, such as predicting a purchase intention of a user, predicting a disease and the like. The model training may be divided into a plurality of model parameter updating processes. During a model parameter updating process, the first participant device inputs the first training data into the first bottom layer sub-model to obtain the first bottom layer output data.

Optionally, in some embodiments of the present disclosure, before the first training data in the first participant device is input into the first bottom layer sub-model, to obtain the first bottom layer output data of the first participant device, the first participant device may perform a sample alignment with the second participant device to determine an intersection sample. The first participant device obtains the first training data corresponding to the intersection sample from the sample data set.

That is, before the first participant device and the second participant device perform joint training, the first participant device may perform the sample alignment with the second participant device to determine the intersection sample in advance. For example, the first participant device includes a first sample set, the first sample set includes IDs of a plurality of samples, and the first participant device includes a first sample data set composed of sample data of each sample in the first sample set. The second participant device includes a second sample set, the second sample set includes IDs of a plurality of samples, and the second participant device includes a second sample data set composed of the sample data of each sample in the second sample set. The first sample set and the second sample set may include different samples, and the first participant device and the second participant device need to use the same sample data for training. Therefore, the first participant device and the second participant device may perform sample alignment to determine an intersection of the first sample set and the second sample set in advance, and the intersection sample is obtained. The intersection sample includes an ID of a sample common to both parties.

After the intersection sample is determined, the first participant device obtains the first training data corresponding to the intersection sample from the first sample data set. That is, the sample data corresponding to each sample in the intersection sample is selected from the first sample data set to form the first training data. The second participant device also selects the sample data corresponding to each sample in the intersection samples from the second sample data set to form the second training data.

At S102, the second bottom layer output data sent by the second participant device is obtained. The second bottom layer output data is obtained by using the second training data and the second bottom layer sub-model.

Optionally, the second participant device inputs the second training data to the second bottom layer sub-model to obtain the second bottom layer output data, and interacts with the first participant device. The interaction process of the first participant device and the second participant device may be that the second participant device sends the second bottom layer output data to the first participant device, so that the first participant device obtains the second bottom layer output data of the second participant device.

In order to avoid leakage of private data of both parties to the other party or a third party, optionally, the first participant device and the second participant device may interact by means of an encryption technology. Then the first participant device obtains the second bottom layer output data of the second participant device.

At S103, the first bottom layer output data and the second bottom layer output data are input into the interaction layer sub-model to obtain interaction layer output data.

The input of the interaction layer sub-model may be configured as a concatenation of the output of the first bottom layer sub-model and the output of the second bottom layer sub-model, i.e., for splicing the output of the first bottom layer sub-model and the second bottom layer sub-model, and connecting the top layer sub-model. In the embodiment, the first bottom layer output data and the second bottom layer output data may be input in series into the interaction layer sub-model, to obtain the interaction layer output data. That is, the splicing data of the first bottom layer output data and the second bottom layer output data may be obtained.

At S104, the interaction layer output data is input into the top layer sub-model to obtain top layer output data, a final error is determined according to the top layer output data and the label data, and the longitudinal federated learning model is trained according to the final error.

Optionally, the interaction layer output data is input into the top layer sub-model. The top layer sub-model may perform a prediction on the interaction layer output data to obtain the top layer output data. According to the top layer output data and the label data, a preset loss function is adopted to determine the final error, and the longitudinal federated learning model is trained according to the final error, so that the longitudinal federated learning model training is completed.

According to the method for training a longitudinal federated learning model provided by the embodiments of the present disclosure, the top layer sub-model in the longitudinal federated learning model is constructed based on the Lipschitz neural network. Then the longitudinal federated learning model is constrained by Lipschitz, and the anti-attack and anti-risk capability of the longitudinal federated learning system may be improved while the expression capability is kept. Dirty data and malicious updating diffusion may be effectively limited to resist attacks, so that the performance of the joint model is ensured while the privacy security of local data is guaranteed.

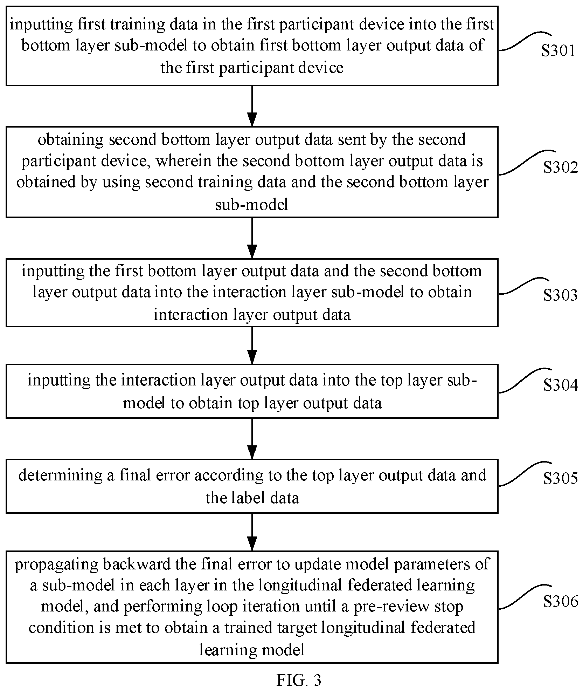

FIG. 3 is a schematic diagram of a method for training a longitudinal federated learning model according to another embodiment of the present disclosure. As illustrated in FIG. 3, the method for training a longitudinal federated learning model may include the following steps.

At S301, first training data in the first participant device is input into the first bottom layer sub-model to obtain first bottom layer output data of the first participant device;

In the embodiment of the present disclosure, the block 301 may be implemented in any one method in each embodiment of the present disclosure, which is not limited here and not repeated here.

At S302, second bottom layer output data sent by the second participant device is obtained. The second bottom layer output data is obtained by using second training data and second bottom layer sub-model.

In the embodiment of the present disclosure, the block 302 may be implemented in any one way of each embodiment of the present disclosure, which is not limited here and not repeated here.

At S303, the first bottom layer output data and the second bottom layer output data are input into the interaction layer sub-model to obtain interaction layer output data.

In the embodiment of the present disclosure, the block 303 may be implemented in any one method in each embodiment of the present disclosure, which is not limited here and not repeated here.

At S304, the interaction layer output data is input into the top layer sub-model to obtain top layer output data.

Optionally, the interaction layer output data is input into the top layer sub-model. The top layer sub-model may perform a prediction on the interaction layer output data to obtain the top layer output data.

In S305, a final error is determined from the top layer output data and the label data.

In S306, the final error is propagated backward to update model parameters of a sub-model in each layer in the longitudinal federated learning model, and loop iteration is performed until a pre-review stop condition is met to obtain a trained target longitudinal federated learning model.

Optionally, the final error is propagated backwards, and the model parameters of the sub-model in each layer in the longitudinal federated learning model are updated by a gradient descent method.

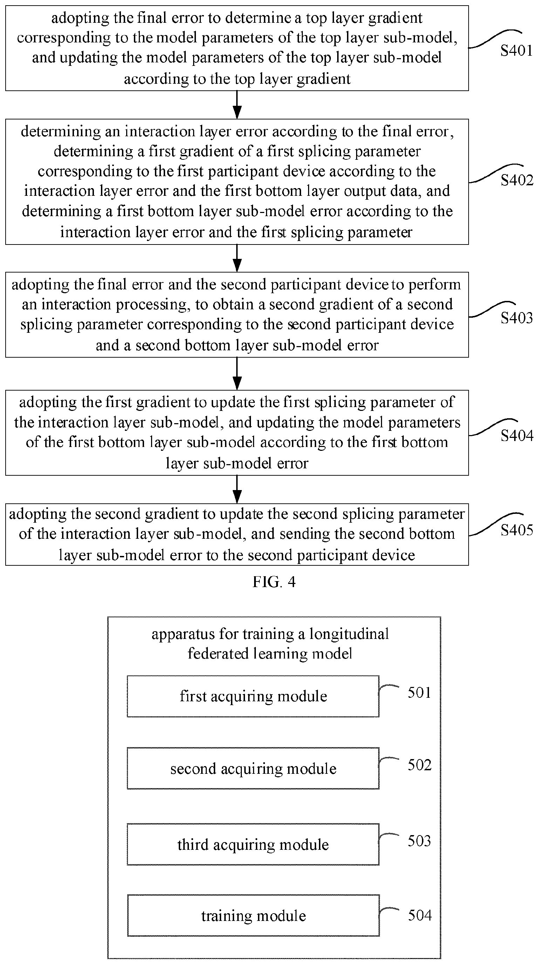

In one implementation, as shown in FIG. 4, the above-mentioned S306, that is, the implementation mode of that the final error is propagated backward to update the model parameters of a sub-model in each layer in the longitudinal federated learning model may include the following steps.

At S401, the final error is adopted to determine a top layer gradient corresponding to the model parameters of the top layer sub-model, and the model parameters of the top layer sub-model are updated according the top layer gradient.

At S402, an interaction layer error is determined according the final error, a first gradient of a first splicing parameter corresponding to the first participant device is determined according to the interaction layer error and the first bottom layer output data, and a first bottom layer sub-model error is determined according to the interaction layer error and the first splicing parameter;

At S403, the final error and second participant device are adopted to perform an interaction processing, to obtain a second gradient of a second splicing parameter corresponding to the second participant device and a second bottom layer sub-model error.

At S404, the first gradient is adopted to update the first splicing parameter of the interaction layer sub-model, and the model parameters of the first bottom layer sub-model are updated according to the first bottom layer sub-model error.

At S405, the second gradient is adopted to update the second splicing parameter of the interaction layer sub-model, and the second bottom layer sub-model error is sent to the second participant device. The second bottom layer sub-model error is used to update the model parameters of the second bottom layer sub-model.

It is worth noting that the top layer sub-model in the longitudinal federated learning model is replaced with a Lipschitz neural network in the present disclosure. That is, the Lipschitz neural network is configured to replace a traditional neural network, so that an anti-attack and anti-risk capability of the federated learning system may be improved, dirty data and malicious updating diffusion may be effectively limited, and attacks are resisted.

It should be noted that in some embodiments of the present disclosure, a full connection layer in the first bottom layer sub-model mentioned in any one of figures 1 to 4 may be the Lipschitz neural network, and/or the full connection layer in the second bottom layer sub-model is the Lipschitz neural network. For example, the full connection layer in the first bottom layer sub-model may be a Lipschitz neural network, or the full connection layer in the second bottom layer sub-model is a Lipschitz neural network. For another example, as shown in figure 2, the full connection layer in the first bottom layer sub-model and the full connection layer in the second bottom layer sub-model are both Lipschitz neural networks.

The Lipschitz neural network in the present disclosure is a network obtained by constraining a fully connected neural network on weights and deviations. In one implementation, the Lipschitz neural network includes a plurality of layers, and a Lipschitz constant constraint is applied to each layer of the plurality of layers. The Lipschitz constraint of the Lipschitz neural network is a product of the Lipschitz constant constraints of each layer of the plurality of layers. A constraint of "KL" in figure 2 is a Lipschitz constant constraint.

Optionally, the Lipschitz constant constraint is applied on each layer by the Lipschitz neural network to limit a diffusion of an input disturbance on the neural network. The Lipschitz constraint of the Lipschitz neural network is a product of the Lipschitz constant constraints of each layer of the plurality of layers, so that network output change is proportional to input change, and the robustness of the system is improved to resist malicious attacks. For example, in a multi-graph machine learning model, a small input disturbance may propagate within the graph and between the graphs. Therefore, the disturbance is greatly amplified in the output space, so that the Lipschitz neural network has a significant defense effect on attacks of such models. The Lipschitz neural network may be applied to a client local model (such as a first participant device and/or a second participant device) so as to limit diffusion of dirty data in a local model, and may also be applied to a joint model (such as the top layer sub-model) to limit diffusion of malicious updates in the joint model so as to improve the robustness of the federated learning system.

In order to construct the Lipschitz neural network, the implementation of the Lipschitz constant constraints, including weight norm constraints and gradient norm constraints, should be determined first. The Lipschitz constant constraints and the neural network expression capability are often considered to be mutually independent tasks. The diffusion of any input disturbances is limited with a weight norm and a gradient norm self-adapted to a plurality of input graphs. The robustness of a multi-graph deep learning system is improved while a remarkable expression capability is obtained. The Lipschitz constant constraint is introduced from two aspects of the weight norm constraint and the gradient norm constraint in the following.

In the embodiment, a formula of the weight norm constraint is expressed as follows: $\|\overline{W}_l\| = 1/K_l$, in which $\overline{W}_l \in R^{N_l \times N_{l-1}}$ is a weight matrix of layer $l$-1 and layer $l$, $K_l$ is the gradient norm constraint of a neural network of layer $l$. The weight matrix $\overline{W}_l$ with the weight norm as $1/K_l$ may be found to be approximate to the weight matrix $W_l$ of the full-connection neural network, by using a nearest matrix orthogonalization and polar decomposition technology.

In the embodiment, a formula of the gradient norm constraint is expressed as follows: $\|\nabla_{\overline{z}_l}\overline{f}\| = K_l$, in which, $\overline{f}$ is an activation function, $K_l$ is the gradient norm constraint of the neural network of layer $l$, and $\overline{z}_l$ is a pre-activation vector of the neural network of layer $l$.

It should also be noted that Weibull is introduced as the activation function of the Lipschitz neural network in the present disclosure. In order to achieve faster convergence, T Weibull activation functions $\overline{f}_1(z), L, \overline{f}_T(z)$ with different parameters are compounded, so that the upper bound of $\overline{f}(z)$ is increased to T in the present disclosure. Therefore, a Lipschitz-Weibull activation function is as follows:

$$\overline{f}(z) = \begin{cases} \sum_{t=1}^{T} \overline{f}_t(z), z \geq \mu_t \\ K_l z, z < \mu_t \end{cases}, f_t(z) = 1 - e^{-\left(\frac{z-\mu_t}{\lambda_t}\right)^{\alpha_t}}$$

$\overline{f}_t$ is a t-th Weibull activation function with unique parameters $\lambda_t, \alpha_t, \mu_t$, and z is an element of the pre-activation vector $\overline{z}_{l-1}$. The relationship between a disturbance diffusion and an attack failure may be effectively simulated by the Weibull activation function. According to the Weibull activation function, the derivative of the Weibull activation function may be obtained as follows:

$$\overline{f}'(z) = \begin{cases} \sum_{t=1}^{T} \frac{\alpha_t}{\lambda_t}\left(\frac{z-\mu_t}{\lambda_t}\right)^{\alpha_t-1} e^{-\left(\frac{z-\mu_t}{\lambda_t}\right)^{\alpha_t}}, z \geq \mu_t \\ K_l, z < \mu_t \end{cases}$$

By limiting the weight norm constraint and the gradient norm constraint in each layer, the Lipschitz constant of the neural network is defined as follows:

$$C = \|\overline{W}_l\| \cdot \|\nabla_{\overline{z}_{l-1}}\overline{f}\| L \|\overline{W}_2\| \cdot \|\nabla_{\overline{z}_1}\overline{f}\| \cdot \|\overline{W}_1\| = \frac{1}{K_l} \cdot K_l L \frac{1}{K_2} \cdot K_2 \cdot 1 = 1$$

$\|\overline{W}_l\| = 1/K_l$ when $l > 1$, and otherwise $\|\overline{W}_1\| = 1$. It can be seen that the neural network is still constrained by the weight and gradient constraint, and the expression capability is kept while the Lipschitz constant is constrained to be 1.

For the Lipschitz neural network $\overline{F}$ and the full-connection neural network $F$, the error between each layer $\|\overline{z}_l -$ $z_l\| \leq \varepsilon$, so that $\dfrac{\|\overline{f}(\overline{z}_{l-1})\|}{\|W_l f(z_{l-1})\| - \varepsilon}$ may be obtained based on the error $\|\overline{z}_l - z_l\| \leq \varepsilon$, $z_l = W_l f(z_{l-1})$ and

$\max\left\{-\min\dfrac{\partial \overline{f}}{\partial \overline{z}_{l-1}}, \max\dfrac{\partial \overline{f}}{\partial \overline{z}_{l-1}}\right\}$ may be obtained by the gradient norm constraint $\|\nabla_{\overline{z}_l}\overline{f}\| = K_l$, and a range of $K_l$ is

obtained based on $\dfrac{\|\overline{f}(\overline{z}_{l-1})\|}{\|W_l f(z_{l-1})\| - \varepsilon}$ and $\max\left\{-\min\dfrac{\partial \overline{f}}{\partial \overline{z}_{l-1}}, \max\dfrac{\partial \overline{f}}{\partial \overline{z}_{l-1}}\right\}$ as follows:

$$1 < K_l \le \min\left\{\frac{\left\|\overline{f}(\overline{z}_{l-1})\right\|}{\left\|W_l f(z_{l-1})\right\| - \varepsilon}, \max\left\{-\min\frac{\partial\overline{f}}{\partial\overline{z}_{l-1}}, \max\frac{\partial\overline{f}}{\partial\overline{z}_{l-1}}\right\}\right\}$$

The upper bound of $K_l$ may be determined as the value of the gradient norm $K_l$ of the Lipschitz neural network in layer $l$.

Therefore, an iteration process of the Lipschitz neural network may be given as following.

I. The value of $K_l$ is determined by obtaining the upper bound of $K_l$, and the value of $K_l$ is a global minimum value in the iteration process of the neural network, and is not greater than 1.5;

II. $$\overline{W}_l \leftarrow \frac{1}{K_l\left\|\overline{W}_l\right\|} \times \overline{W}_l \quad \overline{b}_l \leftarrow \frac{1}{K_l\left\|\overline{b}_l\right\|} \times \overline{b}_l$$, in which, $\overline{W}_l \in \mathrm{R}^{N_l \times N_{l-1}}$ is the weight matrix of the neural networks in layer $l$-1 and layer $l$, and $\overline{b}_l \in \mathrm{R}^{N_l}$ is the deviation between the neural networks in layer $l$-1 and layer $l$. That is, the weight and the deviation of a connection layer may be constrained by $K_l$, so that the weight and the deviation of the connection layer are limited in a small range of fluctuation, and excessive influence of dirty data on the whole network is avoided.

III. The neural network gradient backward propagation is determined by the Lipschitz-Weibull activation function $\overline{f}(z)$ to update the model parameters of each layer.

According to the method for training a longitudinal federated learning model of the present disclosure, the anti-attack and anti-risk capability of the longitudinal federated learning system may be improved, the dirty data and the malicious update diffusion may be effectively limited to resist attacks, an attack defense capability is improved, and a security of the federated learning system is improved.

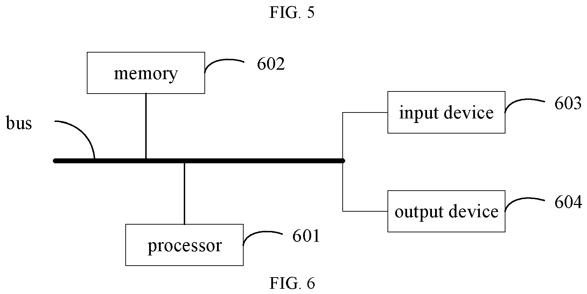

FIG. 5 is a structural block diagram of an apparatus for training a longitudinal federated learning model provided by an embodiment of the present disclosure. It should be noted that the apparatus for training the longitudinal federated learning model is applied to a first participant device. The first participant device includes label data, the longitudinal federated learning model includes a first bottom layer sub-model, an interaction layer sub-model, a top layer sub-model based on a Lipschitz neural network and a second bottom layer sub-model in a second participant device. As illustrated in Fig. 5, the apparatus for training the longitudinal federated learning model may include a first acquiring module 501, a second acquiring module 502, a third acquiring module 503 and a training module 504.

The first acquiring module 501 is configured to input first training data in the first participant device into the first bottom layer sub-model to obtain first bottom layer output data of the first participant device;

The second acquiring module 502 is configured to obtain second bottom layer output data sent by the second participant device. The second bottom layer output data is obtained by using second training data and the second bottom layer sub-model;

The third acquiring module 503 is configured to input the first bottom layer output data and the second bottom layer output data into the interaction layer sub-model to obtain interaction layer output data.

The training module 504 is configured to input the interaction layer output data into the top layer sub-model to obtain top layer output data, to determine a final error according to the top layer output data and the label data, and to train the longitudinal federated learning model according to the final error.

In one implementation, the training module 504 propagates backward the final error to update model parameters of a sub-model in each layer in the longitudinal federated learning model, and performs loop iteration until a pre-review stop condition is met to obtain a trained target longitudinal federated learning model.

In a possible implementation, the final error is propagated backward to update model parameters of the sub-model in each layer in the longitudinal federated learning model by the training module 504 may be implemented as follows: the final error is adopted to determine a top layer gradient corresponding to the model parameters of the top layer sub-model, and the model parameters of the top layer sub-model are updated by the top layer gradient. An interaction layer error is determined according to the final error. A first gradient of a first splicing parameter corresponding to the first participant device is determined based on the interaction layer error and the first bottom layer output data. A first bottom layer sub-model error is determined based on the interaction layer error and the first splicing parameter. An interaction determination is performed by adopting the final error and the second participant device to obtain a second gradient of a second splicing parameter corresponding to the second participant device and a second bottom layer sub-model error. The first splicing parameter in the interaction layer sub-model is updated by adopting the first gradient, and the model parameters of the first bottom layer sub-model are updated according to the first bottom layer sub-model error. The second splicing parameter in the interaction layer sub-model is updated by adopting the second gradient. The second bottom layer sub-model error is sent to the second participant device, and the second bottom layer sub-model error is configured to update the model parameters of the second bottom layer sub-model.

In one implementation, a full connection layer in the first bottom layer sub-model is the Lipschitz neural network, and/or the full connection layer in the second bottom layer sub-model is the Lipschitz neural network.

Optionally, the Lipschitz neural network includes a plurality of layers, and the Lipschitz constant constraint is applied to each layer of the plurality of layers. The Lipschitz constraint of the Lipschitz neural network is a product of the Lipschitz constant constraints of each layer of the plurality of layers.

In one implementation, the Lipschitz constant constraints include a weight norm constraint and a gradient norm constraint. A formula of the weight norm constraint is expressed as follows: $\|\overline{W_l}\| = 1/K_l$ , in which, $\overline{W_l} \in R^{N_l \times N_{l\text{-}1}}$ is a weight matrix of layer $l$-1 and layer $l$, and $K_l$ is the gradient norm constraint of a neural network of layer $l$.

A formula of the gradient norm constraint is expressed as follows: $\|\nabla_{\overline{z_l}}\overline{f}\| = K_l$ , in which $\overline{f}$ is an activation function, $K_l$ is the gradient norm constraint of the neural network of layer $l$, and $\overline{z_l}$ is a pre-activation vector of the neural network of layer $l$.

In one implementation, the activation function is a Lipschitz-Weibull activation function, and the formula of the Lipschitz-Weibull activation function is expressed as follows:

$$\overline{f}(z) = \begin{cases} \sum_{t=1}^{T} \overline{f_t}(z), z \geq \mu_t \\ K_l z, z < \mu_t \end{cases}, f_t(z) = 1 - e^{-\left(\frac{z-\mu_t}{\lambda_t}\right)^{\alpha_t}}$$

$\overline{f_t}$ is a t-th Weibull activation function with unique parameters $\lambda_t, \alpha_t, \mu_t$ , and z is an element of the pre-activation vector $\overline{z}_{l\text{-}1}$.

In one implementation, a range of the gradient norm constraint $K_l$ of the neural network in layer $l$ is as follows:

$$1 < K_l \leq \min\left\{\frac{\|\overline{f}(\overline{z}_{l-1})\|}{\|W_l f(z_{l-1})\| - \varepsilon}, \max\left\{-\min\frac{\partial \overline{f}}{\partial \overline{z}_{l-1}}, \max\frac{\partial \overline{f}}{\partial \overline{z}_{l-1}}\right\}\right\}$$

$\varepsilon$ is an error between each layer; and $W_l$ is the weight matrix of a fully connected neural network.

With regard to the device in the above embodiments, the specific way in which each module performs the operation has been described in detail in the embodiments of the method and will not be elaborated here.

According to the apparatus for training a longitudinal federated learning model provided by the embodiments of the present disclosure, the top layer sub-model in the longitudinal federated learning model is constructed based on the Lipschitz neural network. So that the longitudinal federated learning model is constrained by Lipschitz, the attack resistance and risk resistance of the longitudinal federated learning system may be improved while the expression capability is kept. Dirty data and malicious updating diffusion may be effectively limited to resist attacks, so that the performance of the joint model is ensured while the privacy security of local data is guaranteed.

According to embodiments of the present disclosure, an electronic device and a readable storage medium are further provided in the embodiment.

As illustrated in FIG. 6, FIG. 6 is a block diagram of an electronic device for implementing a training method of a longitudinal federated learning model according to an embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 6, the electronic device includes: one or more processors 601, a memory 602, and an interface configured to connect various components, including a high-speed interface and a low-speed interface. The various components are connected to each other with different buses, and may be installed on a public main board or installed in other ways as needed. The processor may process instructions executed in the electronic device, including instructions stored in or on the memory to display graphical information of the GUI on an external input/output device (such as a display device coupled to an interface). In other implementations, a plurality of processors and/or a plurality of buses may be configured with a plurality of memories if necessary. Similarly, the processor may connect a plurality of electronic devices, and each device provides a part of necessary operations (for example, as a server array, a group of blade servers, or a multi-processor system). FIG. 6 takes one processor 601 as an example.

A memory 602 is a non-transitory computer-readable storage medium provided in the present disclosure. The memory stores instructions executable by the at least one processor, so that the at least one processor executes a method for training a longitudinal federated model as described in the present disclosure. The non-transitory computer-readable storage medium of the present disclosure stores computer instructions, in which the computer instructions are configured so that a method for training a longitudinal federated model provided in the present disclosure.

As a non-transitory computer-readable storage medium, the memory 602 may be configured to store non-transitory software programs, non-transitory computer-executable programs and modules, such as program instructions/modules corresponding to a method for training a longitudinal federated model in the embodiment of the present disclosure (for example, as illustrated in FIG. 5, a first obtaining module 501, a second obtaining module 502, a third obtaining module 503 and a training module 504). The processor 601 executes various functional disclosures and data processing of the server by running a non-transitory software program, an instruction, and a module stored in the memory 602, that is, a method for training a longitudinal federated model in the above method embodiment is implemented.

The memory 602 may include a program storage area and a data storage area. The program storage area may store operation systems and application programs required by at least one function. The data storage area may store data created based on the use of an electronic device according to the method for training a longitudinal federated model, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 optionally includes a memory set remotely relative to the processor 601 that may be connected to an electronic device executing a method for training a longitudinal federated model via a network. The example of the above networks includes but not limited to an Internet, an enterprise intranet, a local area network, a mobile communication network and their combination.

The electronic device for implementing the method for training a longitudinal federated learning model may further include: an input device 603 and an output device 604. The processor 601, the memory 602, the input apparatus 603, and the output apparatus 604 may be connected through a bus or in other ways. In FIG. 6, a connection through a bus is taken as an example.

The input apparatus 603 may receive input digital or character information, and generate key signal input related to user setting and function control of an electronic device executing a method for training a longitudinal federated model, such as a touch screen, a keypad, a mouse, a track pad, a touch pad, an indicating rod, one or more mouse buttons, a trackball, a joystick and other input apparatuses. The output apparatus 604 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, software, software applications, or codes) include machine instructions of a programmable processor, and may be implemented with high-level procedure and/or object-oriented programming languages, and/or assembly/machine languages. As used herein, the terms "a machine-readable medium" and "a computer-readable medium" refer to any computer program product, device, and/or apparatus configured to provide machine instructions and/or data for a programmable processor (for example, a magnetic disk, an optical disk, a memory, a programmable logic device (PLD)), including a machine-readable medium that receive machine instructions as machine-readable signals. The term "a machine-readable signal" refers to any signal configured to provide machine instructions and/or data for a programmable processor.

In order to provide interaction with the user, the systems and technologies described here may be implemented on a computer, and the computer has: a display apparatus for displaying information to the user (for example, a CRT (cathode ray tube) or an LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the scope of embodiments of the present disclosure shall be included within the protection scope of embodiments of the present disclosure.

## Claims

1. A method for training a longitudinal federated learning model, applied to a first participant device, wherein, the first participant device comprises label data, the longitudinal federated learning model comprises a first bottom layer sub-model, an interaction layer sub-model, a top layer sub-model based on a Lipschitz neural network and a second bottom layer sub-model in a second participant device, and the method comprises:

   inputting (S101) first training data in the first participant device into the first bottom layer sub-model to obtain first bottom layer output data of the first participant device;
   obtaining (S102) second bottom layer output data sent by the second participant device, wherein the second bottom layer output data is obtained by using second training data and the second bottom layer sub-model;
   inputting (S103) the first bottom layer output data and the second bottom layer output data into the interaction layer sub-model to obtain interaction layer output data; and
   inputting (S104) the interaction layer output data into the top layer sub-model to obtain top layer output data, determining a final error according to the top layer output data and the label data, and training the longitudinal federated learning model according to the final error.

2. The method of claim 1, wherein training the longitudinal federated learning model according to the final error comprises:
   propagating (S306) backward the final error to update model parameters of a sub-model in each layer in the longitudinal federated learning model, and performing loop iteration until a pre-review stop condition is met to obtain a trained target longitudinal federated learning model.

3. The method of claim 2, wherein propagating backward the final error to update the model parameters of the sub-model in each layer in the longitudinal federated learning model comprises:

   adopting (S401) the final error to determine a top layer gradient corresponding to the model parameters of the top layer sub-model, and updating the model parameters of the top layer sub-model according to the top layer gradient;

determining (S402) an interaction layer error according to the final error, determining a first gradient of a first splicing parameter corresponding to the first participant device according to the interaction layer error and the first bottom layer output data, and determining a first bottom layer sub-model error according to the interaction layer error and the first splicing parameter;

adopting (S403) the final error and the second participant device to perform an interaction processing, to obtain a second gradient of a second splicing parameter corresponding to the second participant device and a second bottom layer sub-model error;

adopting (S404) the first gradient to update the first splicing parameter of the interaction layer sub-model, and updating the model parameters of the first bottom layer sub-model according to the first bottom layer sub-model error; and

adopting (S405) the second gradient to update the second splicing parameter of the interaction layer sub-model, and sending the second bottom layer sub-model error to the second participant device, wherein the second bottom layer sub-model error is used to update the model parameters of the second bottom layer sub-model.

4. The method of any of claims 1 to 3, wherein a full connection layer in the first bottom layer sub-model is the Lipschitz neural network; and/or the full connection layer in the second bottom layer sub-model is the Lipschitz neural network.

5. The method of any of claims 1 to 4, wherein the Lipschitz neural network comprises a plurality of layers, and a Lipschitz constant constraint is applied to each layer of the plurality of layers; and the Lipschitz constraint of the Lipschitz neural network is a product of the Lipschitz constant constraints of each layer of the plurality of layers.

6. The method of claim 5, wherein, the Lipschitz constant constraint comprises a weight norm constraint and a gradient norm constraint,

a formula of the weight norm constraint is expressed as follows:
$\|\overline{W_l}\| = 1/K_l$, wherein, $\overline{W_l} \in \mathrm{R}^{N_l \times N_{l-1}}$ is a weight matrix of layer $l$-1 and layer $l$, $K_l$ is the gradient norm constraint of a neural network of layer $l$; and

a formula of the gradient norm constraint is expressed as follows:
$\|\nabla_{\overline{z_l}}\overline{f}\| = K_l$, wherein, $\overline{f}$ is an activation function, $K_l$ is the gradient norm constraint of the neural network of layer $l$, $\overline{z_l}$ is a pre-activation vector of the neural network of layer $l$.

7. The method of claim 6, wherein the activation function is a Lipschitz-Weibull activation function, and a formula of the Lipschitz-Weibull activation function is expressed as follows:

$$\overline{f}(z) = \begin{cases} \sum\limits_{t=1}^{T} \overline{f_t}(z), z \geq \mu_t \\ K_l z, z < \mu_t \end{cases}, \quad f_t(z) = 1 - e^{-\left(\frac{z-\mu_t}{\lambda_t}\right)^{\alpha_t}}$$

wherein, $^{ft}$ is a t-th Weibull activation function having unique parameters $\lambda_t, \alpha_t, \mu_t$, and z is an element of a pre-activation vector $\overline{z}_{l-1}$.

8. The method of claim 6 or 7, wherein a range of the gradient norm constraint $K_l$ of the neural network of layer $l$ is as follows:

$$1 < K_l \leq \min\left\{\frac{\|\overline{f}(\overline{z}_{l-1})\|}{\|W_l f(z_{l-1})\| - \varepsilon}, \max\left\{-\min\frac{\partial\overline{f}}{\partial\overline{z}_{l-1}}, \max\frac{\partial\overline{f}}{\partial\overline{z}_{l-1}}\right\}\right\}$$

wherein, $\varepsilon$ is an error between each layer; and $W_l$ is the weight matrix of a fully connected neural network.

9. An apparatus for training a longitudinal federated learning model, applied to a first participant device, wherein, the first participant device comprises label data, the longitudinal federated learning model comprises a first bottom layer sub-model, an interaction layer sub-model, a top layer sub-model based on a Lipschitz neural network and a second bottom layer sub-model in a second participant device, and the apparatus comprises:

> a first acquiring module (501), configured to input first training data in the first participant device into the first bottom layer sub-model to obtain first bottom layer output data of the first participant device;
> a second acquiring module (502), configured to obtain second bottom layer output data sent by the second participant device, wherein the second bottom layer output data is obtained by using second training data and the second bottom layer sub-model;
> a third acquiring module (503), configured to input the first bottom layer output data and the second bottom layer output data into the interaction layer sub-model to obtain interaction layer output data; and
> a training module (504), configured to input the interaction layer output data into the top layer sub-model to obtain top layer output data, determine a final error according to the top layer output data and the label data, and train the longitudinal federated learning model according to the final error.

10. The apparatus of claim 9, wherein the training module (504) is configured to:

> propagate backward the final error to update model parameters of a sub-model in each layer in the longitudinal federated learning model, and perform loop iteration until a pre-review stop condition is met to obtain a trained target longitudinal federated learning model;
> especially, wherein the training module (504) is configured to:

>> adopt the final error to determine a top layer gradient corresponding to the model parameters of the top layer sub-model, and update the model parameters of the top layer sub-model according to the top layer gradient;
>> determine an interaction layer error according to the final error, determine a first gradient of a first splicing parameter corresponding to the first participant device according to the interaction layer error and the first bottom layer output data, and determine a first bottom layer sub-model error according to the interaction layer error and the first splicing parameter;
>> adopt the final error and the second participant device to perform an interaction processing, to obtain a second gradient of a second splicing parameter corresponding to the second participant device and a second bottom layer sub-model error;
>> adopt the first gradient to update the first splicing parameter of the interaction layer sub-model, and update the model parameters of the first bottom layer sub-model according to the first bottom layer sub-model error; and
>> adopt the second gradient to update the second splicing parameter of the interaction layer sub-model, and send the second bottom layer sub-model error to the second participant device, wherein the second bottom layer sub-model error is used to update the model parameters of the second bottom layer sub-model.

11. The apparatus of any of claims 9 to 10, wherein a full connection layer in the first bottom layer sub-model is the Lipschitz neural network; and/or the full connection layer in the second bottom layer sub-model is the Lipschitz neural network.

12. The apparatus of any of claims 9 to 11, wherein the Lipschitz neural network comprises a plurality of layers, and a Lipschitz constant constraint is applied to each layer of the plurality of layers; and the Lipschitz constraint of the Lipschitz neural network is a product of the Lipschitz constant constraints of each layer of the plurality of layers;

> especially, the Lipschitz constant constraint comprises a weight norm constraint and a gradient norm constraint, a formula of the weight norm constraint is expressed as follows:
> $\| \overline{W}_l \| = 1/K_l$, wherein, $\overline{W}_l \in R^{N_l \times N_{l-1}}$ is a weight matrix of layer $l$-1 and layer $l$, $K_l$ is the gradient norm constraint of a neural network of layer $l$; and
> a formula of the gradient norm constraint is expressed as follows:
> $\| \nabla_{\overline{z_l}} \overline{f} \| = K_l$, wherein, $\overline{f}$ is an activation function, $K_l$ is the gradient norm constraint of the neural network of layer $l$, $\overline{z}_l$ is a pre-activation vector of the neural network of layer $l$.

13. The apparatus of claim 12, wherein the activation function is a Lipschitz-Weibull activation function, and a formula of the Lipschitz-Weibull activation function is expressed as follows:

$$\overline{f}(z) = \begin{cases} \sum_{t=1}^{T} \overline{f}_t(z), z \ge \mu_t \\ K_l z, z < \mu_t \end{cases}, f_t(z) = 1 - e^{-\left(\frac{z-\mu_t}{\lambda_t}\right)^{\alpha_t}}$$

wherein, $\overline{f}_t$ is a t-th Weibull activation function having unique parameters $\lambda_t, \alpha_t, \mu_t$, and z is an element of a pre-activation vector $\overline{z}_{l-1}$.

14. The apparatus of claim 12 or 13, wherein a range of the gradient norm constraint $K_l$ of the neural network of layer $l$ is as follows:

$$1 < K_l \le \min\left\{ \frac{\left\|\overline{f}(\overline{z}_{l-1})\right\|}{\left\|W_l f(z_{l-1})\right\| - \varepsilon}, \max\left\{ -\min\frac{\partial\overline{f}}{\partial z_{l-1}}, \max\frac{\partial\overline{f}}{\partial z_{l-1}} \right\} \right\}$$

wherein, $\varepsilon$ is an error between each layer; and $W_l$ is the weight matrix of a fully connected neural network.

15. A non-transitory computer-readable storage medium storing computer instructions, wherein the computer instructions are configured to execute the method for training a longitudinal federated learning model in any one of claims 1 to 8 by the computer.

inputting first training data in the first participant device into the first bottom layer sub-model to obtain first bottom layer output data of the first participant device — S101

obtaining second bottom layer output data sent by the second participant device, wherein the second bottom layer output data is obtained by using second training data and the second bottom layer sub-model — S102

inputting the first bottom layer output data and the second bottom layer output data into the interaction layer sub-model to obtain interaction layer output data — S103

inputting the interaction layer output data into the top layer sub-model to obtain top layer output data, determining a final error according to the top layer output data and the label data, and training the longitudinal federated learning model according to the final error — S104

FIG. 1

FIG. 2

inputting first training data in the first participant device into the first bottom layer sub-model to obtain first bottom layer output data of the first participant device — S301

obtaining second bottom layer output data sent by the second participant device, wherein the second bottom layer output data is obtained by using second training data and the second bottom layer sub-model — S302

inputting the first bottom layer output data and the second bottom layer output data into the interaction layer sub-model to obtain interaction layer output data — S303

inputting the interaction layer output data into the top layer sub-model to obtain top layer output data — S304

determining a final error according to the top layer output data and the label data — S305

propagating backward the final error to update model parameters of a sub-model in each layer in the longitudinal federated learning model, and performing loop iteration until a pre-review stop condition is met to obtain a trained target longitudinal federated learning model — S306

FIG. 3

adopting the final error to determine a top layer gradient corresponding to the model parameters of the top layer sub-model, and updating the model parameters of the top layer sub-model according to the top layer gradient — S401

determining an interaction layer error according to the final error, determining a first gradient of a first splicing parameter corresponding to the first participant device according to the interaction layer error and the first bottom layer output data, and determining a first bottom layer sub-model error according to the interaction layer error and the first splicing parameter — S402

adopting the final error and the second participant device to perform an interaction processing, to obtain a second gradient of a second splicing parameter corresponding to the second participant device and a second bottom layer sub-model error — S403

adopting the first gradient to update the first splicing parameter of the interaction layer sub-model, and updating the model parameters of the first bottom layer sub-model according to the first bottom layer sub-model error — S404

adopting the second gradient to update the second splicing parameter of the interaction layer sub-model, and sending the second bottom layer sub-model error to the second participant device — S405

FIG. 4

apparatus for training a longitudinal federated learning model

first acquiring module — 501

second acquiring module — 502

third acquiring module — 503

training module — 504

FIG. 5

FIG. 5

bus

memory — 602

input device — 603

output device — 604

processor — 601

FIG. 6

Europäisches
Patentamt

European
Patent Office

Office européen
des brevets

## EUROPEAN SEARCH REPORT

**Application Number**

EP 22 20 7559

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 149 171 A (TENCENT TECHNOLOGY SHENZHEN CO LTD) 29 December 2020 (2020-12-29) * paragraph [0030] – paragraph [0040] * * figures 1-8 * & US 2023/023520 A1 (CHENG YONG [CN] ET AL) 26 January 2023 (2023-01-26) ----- | 1-15 | INV. G06N3/098 G06N3/09 G06N3/048 |
| A | CN 113 408 743 A (BEIJING BAIDU NETCOM SCI & TECH CO LTD) 17 September 2021 (2021-09-17) * the whole document * ----- | 1-15 | |

TECHNICAL FIELDS
SEARCHED     (IPC)

G06N

The present search report has been drawn up for all claims

| Place of search | Date of completion of the search | Examiner |
|---|---|---|
| The Hague | 3 May 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 7559

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| CN 112149171 | A | 29-12-2020 | CN | 112149171 A | 29-12-2020 |
| | | | US | 2023023520 A1 | 26-01-2023 |
| | | | WO | 2022089256 A1 | 05-05-2022 |
| CN 113408743 | A | 17-09-2021 | NONE | | |

EPO FORM P0459

For more details about this annex : see Official Journal of the European Patent Office, No. 12/82